# EUROPEAN PATENT APPLICATION

(11) **EP 4 578 722 A1**
(43) Date of publication of application: **02.07.2025**
(21) Application number: 23856312.6
(22) Date of filing: 30.06.2023
(51) Int. Cl.: B60L 53/80, B60S 5/06, B60L 53/30

(54) **BATTERY CHARGING AND SWAPPING STATION**

(30) Priority: 24.08.2022 CN 202222242248 U
(71) Applicant: Nio Technology (Anhui) Co., Ltd, Hefei City, Anhui 230601 (CN)
(72) Inventor: ZHOU, Xiaohong, Shanghai 201804 (CN); ZHU, Yue, Shanghai 201804 (CN); ZOU, Jiyong, Shanghai 201804 (CN); CAO, Jia, Shanghai 201804 (CN); ZHANG, Yuwei, Shanghai 201804 (CN); SUN, Chuangcheng, Shanghai 201804 (CN)
(74) Representative: Vossius & Partner Patentanwälte Rechtsanwälte mbB
(86) International application number: PCT/CN2023/105204
(87) International publication number: WO 2024/041222

(57) **Abstract**

A battery charging and swapping station includes a battery swap platform (1), a battery compartment (2) and a battery swap device, the battery compartment (2) including a battery rack (21) and a battery transfer mechanism arranged side by side, where the battery swap platform (1) and the battery rack (21) are both located above ground (7), the battery swap device is mounted within a battery swap channel (3) located below the ground (7), the battery swap channel (3) extends from below the battery swap platform (1) towards the battery compartment (2), a total length of the battery swap channel (3) in an extension direction is less than a total length of the battery charging and swapping station in the direction, and a length of the battery swap channel (3) extending below the battery compartment (2) allows accommodation of one battery.

## Description

### BATTERY CHARGING AND SWAPPING STATION

The present application claims the priority to Chinese Patent Application No. CN202222242248.1, filed on August 24, 2022, and entitled "BATTERY CHARGING AND SWAPPING STATION", which is incorporated herein by reference in its entirety.

### Technical Field

The invention relates to the technical field of battery swapping, and in particular to a battery charging and swapping station.

### Technical Background

Battery swapping is a rapid energy replenishment method for electric vehicles, which specifically involves removing a traction battery of an electric vehicle and immediately swapping the traction battery for another one through a battery swapping device. A battery charging and swapping station is a facility for implementing swapping of traction batteries of electric vehicles.

The existing battery charging and swapping stations mainly have the following arrangement forms. In a first type of battery charging and swapping station, which is of a lifting type, a lifting mechanism is mounted to a battery swap platform, and when a vehicle is parked on the battery swap platform, the vehicle is lifted by the lifting mechanism to provide a battery swap space for a battery swap device, which results in longer battery swapping time and safety hazards due to the need to lift the vehicle. In a second type of battery charging and swapping station, a support frame is mounted below a battery swap platform to raise the battery swap platform, and this type of battery charging and swapping station requires a long ramp to connect to the battery swap platform, which results in increase of the area occupied by the battery charging and swapping station and limits site selection options.

A patent with the publication No. CN 108216150 A discloses a battery charging and swapping station for an electric vehicle, the battery charging and swapping station including a plurality of battery swapping positions, and each battery swapping position including a positioning platform higher than a wheel travel surface and an underground compartment below the wheel travel surface, where the positioning platform is located above the underground compartment; and a battery storage area and a battery swap mechanism are provided in the underground compartment, the battery storage area being configured to store battery packs, and the battery swap mechanism being configured to dismount a first battery pack from the electric vehicle and store the first battery pack in the battery storage area, as well as to obtain a second battery pack from the battery storage area and mount the second battery pack to the aforementioned electric vehicle.

In the battery charging and swapping station disclosed in the above patent, although there is no need to lift a vehicle or provide a long ramp, the capital construction workload for the battery charging and swapping station is exceptionally large, and the construction difficulty is high, which greatly increases the construction costs of the battery charging and swapping station.

Therefore, a new technical solution is needed in the art to solve the above problem.

### Summary

The invention aims to solve the above technical problem, that is, to solve the problem that the layout of the existing battery charging and swapping station is not ideal.

In a first aspect, the invention provides a battery charging and swapping station, including a battery swap platform, a battery compartment and a battery swap device, the battery compartment including a battery rack and a battery transfer mechanism arranged side by side, the battery swap platform being capable of carrying a vehicle that requires a battery swap, the battery rack being configured to store batteries, the battery transfer mechanism being capable of transferring a battery between the battery rack and the battery swap device, the battery swap device being capable of dismounting, mounting and conveying a battery, where the battery swap platform and the battery rack are both located above ground, and the battery swap device is mounted within a battery swap channel located below the ground, where the battery swap channel extends from below the battery swap platform towards the battery compartment, a total length of the battery swap channel in an extension direction is less than a total length of the battery charging and swapping station in the direction, and a length of the battery swap channel extending below the battery compartment allows accommodation of one battery.

In a preferred technical solution of the battery charging and swapping station described above, the battery swap device includes: a battery swap mechanism located below the battery swap platform, the battery swap mechanism being capable of dismounting and mounting a battery; a conveying mechanism capable of conveying a battery between the battery transfer mechanism and the battery swap mechanism; and a temporary storage mechanism located on a side of the battery swap mechanism away from the conveying mechanism, the temporary storage mechanism being configured to temporarily store a fully charged battery conveyed by the conveying mechanism from the battery transfer mechanism or temporarily store a drained battery dismounted from a vehicle by the battery swap mechanism.

In a preferred technical solution of the battery charging and swapping station described above, the battery swap mechanism includes a first fixation member, a lifting assembly, a battery bearing platform, and a locking and unlocking assembly, where the lifting assembly has a bottom end fixedly connected to the first fixation member and a top end fixedly connected to the battery bearing platform, and is capable of lifting the battery bearing platform to a battery swap position, and the locking and unlocking assembly is mounted on the battery bearing platform, and is capable of dismounting and mounting a battery.

In a preferred technical solution of the battery charging and swapping station described above, the battery swap mechanism further includes a first driving assembly and a first transfer member that are mounted to the first fixation member, the first transfer member being capable of carrying a battery, and the first driving assembly being connected to the first transfer member and being capable of driving the first transfer member to move, so as to transfer a battery located on the first transfer member to the conveying mechanism or the temporary storage mechanism.

In a preferred technical solution of the battery charging and swapping station described above, the conveying mechanism includes a conveying vehicle and a lift mounted to the conveying vehicle, the conveying vehicle being capable of reciprocating along the battery swap channel between the battery transfer mechanism and the battery swap mechanism, and the lift being capable of driving a battery to move vertically relative to the conveying vehicle in a vertical direction.

In a preferred technical solution of the battery charging and swapping station described above, the conveying mechanism further includes a second driving assembly and a second transfer member that are mounted to the lift, the second transfer member being capable of carrying a battery, and the second driving assembly being connected to the second transfer member and being capable of driving the second transfer member to move, so as to transfer a battery located on the second transfer member to the battery swap mechanism.

In a preferred technical solution of the battery charging and swapping station described above, the conveying mechanism further includes a horizontal rail mounted in the battery swap channel, the horizontal rail having one end extending to the transfer mechanism and the other end extending to the battery swap mechanism, and the conveying vehicle is mounted on the horizontal rail and is movable along the horizontal rail.

In a preferred technical solution of the battery charging and swapping station described above, the temporary storage mechanism includes a second fixation member, and a third driving assembly and a third transfer member that are mounted to the second fixation member, the third transfer member being capable of carrying a battery, and the third driving assembly being connected to the third transfer member and being capable of driving the third transfer member to move, so as to transfer a battery located on the third transfer member to the battery swap mechanism.

In a preferred technical solution of the battery charging and swapping station described above, the battery compartment further includes a container in which the battery rack and the battery transfer mechanism are mounted, and an opening is provided in a bottom plate of the container and is in communication with the battery swap channel.

In a preferred technical solution of the battery charging and swapping station described above, the battery rack is located between the battery transfer mechanism and the battery swap platform, and the battery swap channel extends to below the battery rack; or the battery transfer mechanism is located between the battery rack and the battery swap platform, and a lower portion of the battery transfer mechanism is located within the battery swap channel; or two of the battery racks are provided, the battery transfer mechanism is located between the two battery racks, and the battery swap channel extends to below the battery rack which is close to the battery swap platform.

With the foregoing technical solutions, the design of layout of the battery charging and swapping station is optimized in the invention by providing the battery swap channel, which has an extension length less than the total length of the battery charging and swapping station, below the ground to connect the battery compartment and the battery swap platform that are located above the ground, and by mounting the battery swap device in the battery swap channel, such that the vehicle that requires a battery swap can be parked on the battery swap platform, without the need to lift the vehicle or to provide a support frame below the battery swap platform to raise the battery swap platform. In addition, compared with the battery charging and swapping station for an electric vehicle disclosed in the patent with the publication No. CN 108216150 A, the battery charging and swapping station of the invention does not require excavating the entire area below the battery charging and swapping station, and only partial excavation is needed, resulting in a smaller capital construction workload, lower construction difficulty, and significantly reduced construction costs of the battery charging and swapping station.

Further, the battery charging and swapping station of the invention can improve the efficiency of swapping of the battery charging and swapping station and reduce the swapping time by providing a temporary storage mechanism capable of temporarily storing a battery in the battery swap channel.

### Brief Description of Drawings

Preferred implementations of the invention will be described below with reference to the accompanying drawings, in which:
FIG. 1 is a schematic diagram of a battery charging and swapping station of the invention;
FIG. 2 is a partially enlarged schematic diagram of area A in FIG. 1; and
FIG. 3 is a schematic diagram of a battery swap mechanism of the invention.

### List of reference signs:

1. Battery swap platform; 2. Battery compartment; 21. Battery rack; 22. Stacker; 23. Container; 211. Storage space; 231. Opening; 3. Battery swap channel; 4. Battery swap mechanism; 41. First fixation member; 42. Battery bearing platform; 43. Locking and unlocking assembly; 44. First transfer roller; 5. Conveying mechanism; 51. Conveying vehicle; 52. Second transfer roller; 53. Horizontal track; 6. Temporary storage mechanism; 61. Second fixation member; 62. Third transfer roller; 7. Ground.

### Detailed Description of Embodiments

Preferred implementations of the invention will be described below with reference to the accompanying drawings. Those skilled in the art should understand that these implementations are merely used to explain the technical principles of the invention, and are not intended to limit the scope of protection of the invention.

It should be noted that, in the description of the invention, the terms that indicate the direction or positional relationship, such as "left", "right", "upper", "lower", "top", and "bottom" are based on the direction or positional relationship shown in the figures, which is merely for ease of description instead of indicating or implying that the device or element must have a particular orientation and be constructed and operated in a particular orientation, and therefore, should not be construed as limiting the invention.

In addition, it should also be noted that, in the description of the invention, the terms "arrange", "connect" and "mount" should be interpreted in a broad sense unless explicitly defined and limited otherwise. For example, a connection may be a fastened connection, a detachable connection, or an integral connection. For those skilled in the art, the specific meanings of the foregoing terms in the invention can be interpreted according to a specific situation.

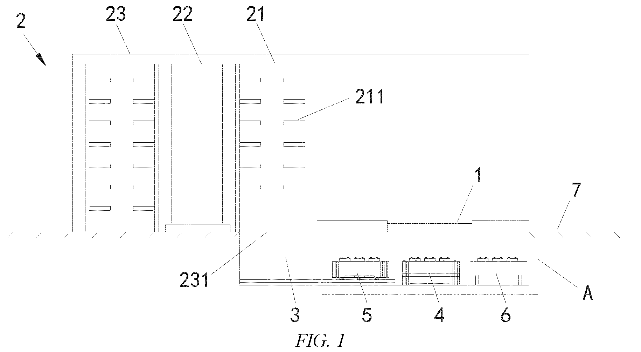

Specifically, as shown in FIG. 1, the invention provides a battery charging and swapping station for replacing a traction battery for a vehicle. The battery charging and swapping station of the invention mainly includes a battery swap platform 1, a battery compartment 2 and a battery swap device. The battery swap platform 1 can carry a vehicle that requires a battery swap, the battery compartment 2 is mainly configured to store batteries, and the battery swap device is mainly configured to dismount, mount and convey a battery.

After entering the battery charging and swapping station, a vehicle that requires a battery swap can be guided by a working person to park at a designated position on the battery swap platform 1, or the vehicle automatically parks at the designated position on the battery swap platform 1, and the battery swap device dismounts a drained battery from the vehicle and conveys the drained battery to the battery compartment 2, and then brings back a fully charged battery from the battery compartment 2 and mounts the fully charged battery to the vehicle.

With continued reference to FIG. 1, the battery compartment of the invention includes a battery rack 21 and a battery transfer mechanism which, in the invention, is a stacker 22. The battery rack 21 is configured to store batteries, and the stacker 22 is configured to transfer a battery between the battery rack 21 and the battery swap device.

The battery swap platform 1, the battery rack 21 and the stacker 22 are all located above ground 7, and the battery swap device is mounted in a battery swap channel 3 located below the ground 7. The battery swap channel 3 extends from below the battery swap platform 1 towards the battery compartment 2, and a total length of the battery swap channel 3 in an extension direction (i.e., a length of the battery swap channel 3 in a left-right direction in FIG. 1) is less than a total length of the battery charging and swapping station in this direction (i.e., the sum of lengths of the battery swap platform 1 and the battery compartment 2 in the left-right direction in FIG. 1). A length of the battery swap channel 3 extending below the battery compartment 2 allows accommodation of one battery.

The design of layout of the battery charging and swapping station is optimized in the invention by providing the battery swap channel 3, which has an extension length less than the total length of the battery charging and swapping station, below the ground 7 to connect the battery compartment 2 and the battery swap platform 1 that are located above the ground 7, and by mounting the battery swap device in the battery swap channel 3, such that the vehicle that requires a battery swap can be parked on the battery swap platform 1, without the need to lift the vehicle or to provide a support frame below the battery swap platform 1 to raise the battery swap platform 1.

In addition, compared with the battery charging and swapping station for an electric vehicle disclosed in the patent with the publication No. CN 108216150 A, the battery charging and swapping station of the invention does not require excavating the entire area below the battery charging and swapping station, and only partial excavation is needed, resulting in a smaller capital construction workload, lower construction difficulty, and significantly reduced construction costs.

It should be noted that, in practical applications, those skilled in the art can configure the battery swap device as a rail guided vehicle (RGV), as an automated guided vehicle (AGV), or the like, and such adjustments and changes to the specific type of the battery swap device do not deviate from the principle and scope of the invention, and should fall into the scope of protection of the invention.

In addition, in the implementation below, although the battery transfer mechanism is illustrated with the stacker 22 as an example, this is not intended to limit the scope of the invention, and any mechanism that can transfer a battery between the battery rack 21 and the battery swap device may be a substitute for the stacker 22.

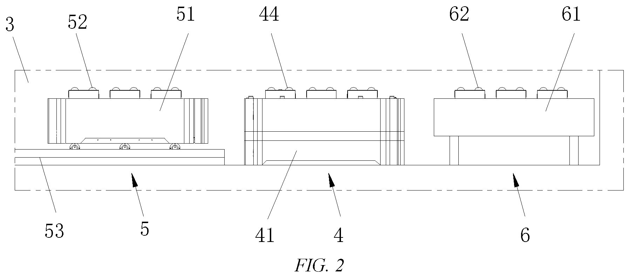

Preferably, as shown in FIGs. 1 and 2, the battery swap device of the invention includes a battery swap mechanism 4, a conveying mechanism 5 and a temporary storage mechanism 6.

The battery swap mechanism 4 is located below the battery swap platform 1, and the battery swap mechanism 4 can dismount and mount a battery. The conveying mechanism 5 can convey the battery between the stacker 22 and the battery swap mechanism 4. The temporary storage mechanism 6 is located at a side of the battery swap mechanism 4 away from the conveying mechanism 5, and the temporary storage mechanism 6 is configured to temporarily store a fully charged battery conveyed by the conveying mechanism 5 from the stacker 22 or to temporarily store a drained battery dismounted from a vehicle by the battery swap mechanism 4.

Providing the temporary storage mechanism 6 can improve the efficiency of the battery swap and reduce the battery swap time.

For example, the conveying mechanism 5 is located at a left side of the battery swap mechanism 4, the temporary storage mechanism 6 is located at a right side of the battery swap mechanism 4, and the conveying mechanism 5 carries and conveys a fully charged battery removed from the stacker 22 to the left side of the battery swap mechanism 4 to stand by.

After a drained battery of the vehicle is dismounted by the battery swap mechanism 4, the drained battery on the battery swap mechanism 4 is transferred to the temporary storage mechanism 6 located on the right side of the battery swap mechanism, and then a fully charged battery carried on the conveying mechanism 5 is transferred to the battery swap mechanism 4. After the fully charged battery is mounted to the vehicle by the battery swap mechanism 4, the drained battery on the temporary storage mechanism 6 is transferred first to the battery swap mechanism 4, and then to the conveying mechanism 5.

The conveying mechanism 5 conveys the drained battery to the stacker 22 and brings back a fully charged battery, and if a new vehicle is already parked on the battery swap platform 1 at this time, the fully charged battery on the conveying mechanism 5 can be transferred to the battery swap mechanism 4 after the battery swap mechanism 4 dismounts the drained battery from the vehicle and transfers the drained battery to the temporary storage mechanism 6.

If no new vehicle is parked on the battery swap platform 1 at this time, the fully charged battery on the conveying mechanism 5 can be first transferred to the battery swap mechanism 4, and then transferred to the temporary storage mechanism 6 for temporary storage. After the drained battery on the vehicle is dismounted by the battery swap mechanism 4 and transferred to the conveying mechanism 5, the fully charged battery on the temporary storage mechanism 6 is then transferred to the battery swap mechanism 4, and the drained battery is directly conveyed by the conveying mechanism 5 to the stacker 22.

Preferably, as shown in FIG. 1, the battery compartment 2 of the invention further includes a container 23, and the battery rack 21 and the stacker 22 are mounted in the container 23. An opening 231 is provided in a bottom plate of the container 23, the opening 231 is in communication with the battery swap channel 3, the battery rack 21 is configured to store batteries, and the stacker 22 can transfer a battery between the battery rack 21 and the conveying mechanism 5.

For example, the battery rack 21 has a plurality of storage spaces 211 for storing batteries, the opening 231 in communication with the battery swap channel 3 is located below the battery rack 21, the conveying mechanism 5 can move along the battery swap channel 3 to the opening 231, and the stacker 22 can access and transfer a fully charged battery located on the storage space 211 to the conveying mechanism 5 located at the opening 231, or can access and transfer a battery located on the conveying mechanism 5 to the storage space 211 of the battery rack 21.

Preferably, as shown in FIG. 1, in the invention, two battery racks 21 are arranged in the container 23 of the battery compartment 2, and the stacker 22 is located between the two battery racks 21.

The opening 231 in communication with the battery swap channel 3 is preferably arranged below the battery rack 21 close to the battery swap platform 1.

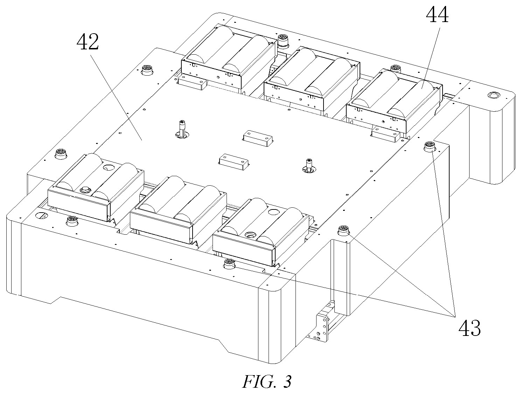

Preferably, as shown in FIGs. 2 and 3, the battery swap mechanism 4 of the invention includes a first fixation member 41, a lifting assembly (not shown in the figures), a battery bearing platform 42 and a locking and unlocking assembly 43.

The lifting assembly has a bottom end fixedly connected to the first fixation member 41 and a top end fixedly connected to the battery bearing platform 42, and can lift the battery bearing platform 42 to a battery swap position, the locking and unlocking assembly 43 is mounted on the battery bearing platform 42, and the locking and unlocking assembly 43 can dismount and mount a battery.

When a battery is required to be dismounted, the battery bearing platform 42 and the locking and unlocking assembly 43 mounted on the battery bearing platform 42 are lifted together by the lifting assembly to the battery swap position, the locking and unlocking assembly 43 loosens fasteners (typically bolts) used to fasten the battery, the drained battery automatically falls on the battery bearing platform 42, and the lifting assembly then lowers the battery bearing platform 42.

It should be noted that, in practical applications, those skilled in the art can configure the first fixation member 41 as a fixation housing, a fixation bracket, a fixation block or the like, and such adjustments and changes to the specific structural form of the first fixation member 41 do not deviate from the principle and scope of the invention, and should fall into the scope of protection of the invention.

It should be further noted that the specific structural forms of the lifting assembly and the locking and unlocking assembly 43 are not limited in the invention, and those skilled in the art may employ any structural form of the lifting assembly and the locking and unlocking assembly 43 existing in the battery swap mechanism in the prior art.

Preferably, as shown in FIGs. 2 and 3, the battery swap mechanism 4 of the invention further includes a first driving assembly (not shown in the figures) and a first transfer member that are mounted to the first fixation member 41. The first transfer member can carry a battery, and the first driving assembly is connected to the first transfer member and can drive the first transfer member to move, so as to transfer a battery located on the first transfer member to the conveying mechanism 5 or the temporary storage mechanism 6.

For example, the first driving assembly includes an electric motor and a gear transmission system, and the first transfer member includes a plurality of first transfer rollers 44, the plurality of first transfer rollers 44 being divided into two rows and located on two sides of the battery bearing platform 42, respectively, and a plurality of first transfer rollers 44 of each row being distributed at intervals in a length direction of the battery swap channel 3. The electric motor is connected to the plurality of first transfer rollers 44 via the gear transmission system and can drive the plurality of first transfer rollers 44 to rotate synchronously.

In a non-lifted state, a top surface of the battery bearing platform 42 is slightly lower than top surfaces of the first transfer rollers 44, a drained battery falls on the first transfer rollers 44 as the battery bearing platform 42 descends, the electric motor can drive the plurality of first transfer rollers 44 to rotate clockwise by means of the gear transmission system so as to transfer the drained battery located on the first transfer rollers 44 to the temporary storage mechanism 6, and the electric motor can also drive the plurality of first transfer rollers 44 to rotate counterclockwise by means of the gear transmission system so as to transfer the drained battery located on the first transfer rollers 44 to the conveying mechanism 5.

After the fully charged battery is conveyed by the conveying mechanism 5, the fully charged battery can be transferred first to the first transfer rollers 44, and in the process of the lifting assembly lifting the battery bearing platform 42 upwardly, the fully charged battery located on the first transfer rollers 44 is lifted by the battery bearing platform 42.

It should be noted that the first driving assembly is not limited to the above structural form of the "electric motor + gear transmission system," for example, the first driving assembly may also be configured as "an electric motor + a gear and rack transmission system", "an electric motor + a sprocket and chain transmission system" and the like. Moreover, the first transfer member is also not limited to the above structural form of the plurality of transfer rollers, for example, the first transfer member may also be configured as a conveyor belt, a transfer plate and the like. Such adjustments and changes to the specific structural forms of the first driving assembly and the first transfer member do not deviate from the principle and scope of the invention, and should fall into the scope of protection of the invention.

Preferably, as shown in FIG. 2, the conveying mechanism 5 of the invention includes a conveying vehicle 51 and a lift (not shown in the figure) mounted to the conveying vehicle 51. The conveying vehicle 51 can reciprocate along the battery swap channel 3 between the battery compartment 2 and the battery swap mechanism 4. The lift can drive a battery to move vertically relative to the conveying vehicle 51 in a vertical direction.

After the conveying vehicle 51 carries a drained battery dismounted from a vehicle and moves to below the opening 231 of the battery compartment 2, the lift carries the drained battery and ascends to the opening 231, the stacker 22 first removes the drained battery and places the drained battery on the storage space 211 of the battery rack 21, and then takes a fully charged battery from the storage space 211 of the battery rack 21 and places the fully charged battery on the lift, the lift carries the fully charged battery and descends, and the conveying vehicle 51 conveys the fully charged battery to the battery swap mechanism 4.

It should be noted that the specific structural form of the lift is not defined in the invention, for example, the lift may be configured as a structural form of a linear electric motor + a lifting plate, the linear electric motor being connected to the lifting plate and being capable of driving the lifting plate to move vertically in a vertical direction, or the lift may also be configured as an electric motor + a gear and a rack meshing with each other + a lifting plate, the electric motor being connected to the gear, the rack being fixedly connected to the lifting plate and extending in the vertical direction, the electric motor driving the gear to rotate, and the gear driving the rack and the lifting plate to move vertically, etc., as long as a battery can be lifted by the lift.

Preferably, as shown in FIG. 2, the conveying mechanism 5 of the invention further includes a second driving assembly (not shown in the figures) and a second transfer member that are mounted to the conveying vehicle 51. The second transfer member can carry a battery, and the second driving assembly is connected to the second transfer member and can drive the second transfer member to move, so as to transfer a battery located on the second transfer member to the battery swap mechanism 4.

For example, the second driving assembly has the same structure as the first driving assembly, and includes an electric motor and a gear transmission system, and the second transfer member includes a plurality of second transfer rollers 52, the plurality of second transfer rollers 52 being divided into two rows and located on two sides of the lift, respectively, a plurality of second transfer rollers 52 on each row being distributed at intervals in a length direction of the battery swap channel 3. The electric motor is connected to the plurality of second transfer rollers 52 via the gear transmission system, and can drive the plurality of second transfer rollers 52 to rotate synchronously.

In a non-lifted state, a top surface of the lift is slightly lower than top surfaces of the second transfer rollers 52, and a fully charged battery falls on the second transfer rollers 52 as the lift descends, the electric motor can drive the plurality of second transfer rollers 52 to rotate clockwise by means of the gear transmission system, so as to transfer the fully charged battery located on the second transfer rollers 52 to the battery swap mechanism 4.

A drained battery transferred from the battery swap mechanism 4 is placed on the second transfer rollers 52, and after the conveying mechanism 5 conveys the drained battery to below the battery compartment 2, the lift is operated, and during lifting, the lift jacks up the drained battery located on the second transfer rollers 52 and lifts the drained battery to the opening 231 of the battery compartment 2.

It should be noted that, similar to the first driving assembly, the **second** driving assembly is also not limited to the above structural form of the "electric motor + gear transmission system," for example, the second driving assembly may also be configured as an "electric motor + gear and rack transmission system", an "electric motor + sprocket and chain transmission system" and the like. Moreover, the second transfer member is also not limited to the above structural form of the plurality of transfer rollers, for example, the second transfer member may also be configured as a conveyor belt, a transfer plate and the like. Such adjustments and changes to the specific structural forms of the second driving assembly and the second transfer member do not deviate from the principle and scope of the invention, and should fall into the scope of protection of the invention.

Preferably, as shown in FIGs. 1 and 2, the conveying mechanism 5 of the invention further includes a horizontal rail 53 mounted in the battery swap channel 3, the horizontal rail 53 has one end extending to below the battery compartment 2, and the horizontal rail 53 has the other end extending to the battery swap mechanism 4. The conveying vehicle 51 is mounted on the horizontal rail 53 and can move along the horizontal rail 53.

It should be noted that the specific form of the conveying mechanism 5 is not limited to only one form, and those skilled in the art can adjust the configuration thereof, as long as the function of conveying a battery between the battery compartment 2 and the battery swap mechanism 4 can be realized. For example, the conveying mechanism may also be provided in the form of a conveyor belt + a lift, the conveyor belt being located between the battery compartment 2 and the battery swap mechanism 4, and the lift being located below the battery compartment. The conveyor belt may also be replaced with transfer rollers.

Preferably, as shown in FIG. 2, the temporary storage mechanism 6 of the invention includes a second fixation member 61, and a third driving assembly (not shown in the figure) and a third transfer member that are mounted to the second fixation member 61. The third transfer member can carry a battery, and the third driving assembly is connected to the third transfer member and can drive the third transfer member to move, so as to transfer a battery located on the third transfer member to the battery swap mechanism 4.

For example, the third driving assembly has the same structure as the first driving assembly, and includes an electric motor and a gear transmission system, and the third transfer member includes a plurality of third transfer rollers 62, the plurality of third transfer rollers 62 being divided into two rows, and a plurality of third transfer rollers 62 on each row being distributed at intervals in a length direction of the battery swap channel 3. The electric motor is connected to the plurality of third transfer rollers 62 via the gear transmission system and can drive the plurality of third transfer rollers 62 to rotate synchronously.

A battery, which may be a fully charged battery or a drained battery, temporarily stored on the temporary storage mechanism 6 is placed on the third transfer rollers 62, and when the battery is required to be moved to the battery swap mechanism 4, the electric motor is operated, and the electric motor can drive the plurality of third transfer rollers 62 to rotate counterclockwise by means of the gear transmission system, so as to transfer the battery located on the third transfer rollers 62 to the battery swap mechanism 4.

It should be noted that, similar to the first driving assembly, the third driving assembly is also not limited to the above structural form of the "electric motor + gear transmission system," for example, the third driving assembly may also be configured as an "electric motor + gear and rack transmission system", an "electric motor + sprocket and chain transmission system" and the like. Moreover, the third transfer member is also not limited to the above structural form of the plurality of transfer rollers, for example, the third transfer member may also be configured as a conveyor belt, a transfer plate and the like. Such adjustments and changes to the specific structural forms of the third driving assembly and the third transfer member do not deviate from the principle and scope of the invention, and should fall into the scope of protection of the invention.

In addition, it should be noted that in practical applications, those skilled in the art can configure the second fixation member 61 as a fixation housing, a fixation bracket, a fixation block or the like, and such adjustments and changes of the specific structural form of the second fixation member 61 do not deviate from the principle and scope of the invention, and should fall into the scope of protection of the invention.

It should be noted that although the above implementation is described in conjunction with two battery racks 21 being provided in the battery compartment 2, the arrangement is not limited to only one form, and those skilled in the art can select the number of battery racks 21 according to actual application scenarios and the relationship between the battery rack 21 and the stacker 22.

For example, in an alternative implementation, one battery rack 21 and one stacker 22 may be provided in the battery compartment 2, the battery rack 21 is arranged between the stacker 22 and the battery swap platform 1, and the rest of the arrangement is the same as the above embodiment and will not be repeated herein.

In another alternative implementation, one battery rack 21 and one stacker 22 may be provided in the battery compartment 2, but the stacker 22 is located between the battery rack 21 and the battery swap platform 1. In this case, a lower portion of the stacker 22 can be arranged in the battery swap channel 3, for example, the bottom of the stacker 22 is directly fixed in the battery swap channel 3, or the stacker 22 is fixed in the battery compartment 2 but a lifting rail of the stacker extends downwardly into the battery swap channel 3. In this arrangement, the lift on the conveying mechanism 5 may be omitted, the stacker 22 directly interfaces with the second transfer rollers 52, thereby simplifying the structure of the conveying mechanism 5.

It should also be noted that, in the above implementation, although the length of the battery swap channel 3 is described in conjunction with extending from a side edge of a side of the battery swap platform 1 away from the battery compartment 2 to below the battery compartment 2, the length of the battery swap channel 3 is not limited thereto, and can be adjusted by those skilled in the art, as long as the adjusted technical solution satisfies the condition that the total length of the battery swap channel 3 is less than the total length of the battery charging and swapping station in this direction.

For example, when the battery swap device includes only the battery swap mechanism 4 and the conveying mechanism 5, without the temporary storage mechanism 6 being provided, the length of the battery swap channel 3 can be shortened to extend from a right side position of the battery swap mechanism 4 to below the battery compartment 2, thereby shortening the excavation length of the battery swap channel 3, and further reducing the construction difficulty and construction costs.

Those skilled in the art should understand that, although some of the embodiments herein include some but not other features included in other embodiments, the combination of the features of different embodiments means being within the scope of the present application and forms different embodiments. For example, in the claims of the invention, any one of the claimed embodiments can be used in any combination.

Heretofore, the technical solutions of the invention have been described with reference to the preferred implementations shown in the accompanying drawings. However, those skilled in the art can readily understand that the scope of protection of the invention is apparently not limited to these specific implementations. Without departing from the principles of the invention, those skilled in the art may make equivalent changes or replacements to related technical features. The technical solutions obtained after these changes or replacements fall within the scope of protection of the invention.

## Claims

1. A battery charging and swapping station, comprising a battery swap platform, a battery compartment and a battery swap device, the battery compartment comprising a battery rack and a battery transfer mechanism arranged side by side, the battery swap platform being capable of carrying a vehicle that requires a battery swap, the battery rack being configured to store batteries, the battery transfer mechanism being capable of transferring a battery between the battery rack and the battery swap device, the battery swap device being capable of dismounting, mounting and conveying a battery, wherein
the battery swap platform and the battery rack are both located above ground, and the battery swap device is mounted within a battery swap channel located below the ground, wherein the battery swap channel extends from below the battery swap platform towards the battery compartment, a total length of the battery swap channel in an extension direction is less than a total length of the battery charging and swapping station in the direction, and a length of the battery swap channel extending below the battery compartment allows accommodation of one battery.

2. The battery charging and swapping station according to claim **1,** wherein the battery swap device comprises:
a battery swap mechanism located below the battery swap platform, the battery swap mechanism being capable of dismounting and mounting a battery;
a conveying mechanism capable of conveying a battery between the battery transfer mechanism and the battery swap mechanism; and
a temporary storage mechanism located on a side of the battery swap mechanism away from the conveying mechanism, the temporary storage mechanism being configured to temporarily store a fully charged battery conveyed by the conveying mechanism from the battery transfer mechanism or temporarily store a drained battery dismounted from a vehicle by the battery swap mechanism.

3. The battery charging and swapping station according to claim 2, wherein the battery swap mechanism comprises a first fixation member, a lifting assembly, a battery bearing platform, and a locking and unlocking assembly, wherein the lifting assembly has a bottom end fixedly connected to the first fixation member and a top end fixedly connected to the battery bearing platform, and is capable of lifting the battery bearing platform to a battery swap position, and the locking and unlocking assembly is mounted on the battery bearing platform, and is capable of dismounting and mounting a battery.

4. The battery charging and swapping station according to claim 3, wherein the battery swap mechanism further comprises a first driving assembly and a first transfer member that are mounted to the first fixation member, the first transfer member being capable of carrying a battery, and the first driving assembly being connected to the first transfer member and being capable of driving the first transfer member to move, so as to transfer a battery located on the first transfer member to the conveying mechanism or the temporary storage mechanism.

5. The battery charging and swapping station according to claim 2, wherein the conveying mechanism comprises a conveying vehicle and a lift mounted to the conveying vehicle, the conveying vehicle being capable of reciprocating along the battery swap channel between the battery transfer mechanism and the battery swap mechanism, and the lift being capable of driving a battery to move vertically relative to the conveying vehicle in a vertical direction.

6. The battery charging and swapping station according to claim 5, wherein the conveying mechanism further comprises a second driving assembly and a second transfer member that are mounted to the conveying vehicle, the second transfer member being capable of carrying a battery, and the second driving assembly being connected to the second transfer member and being capable of driving the second transfer member to move, so as to transfer a battery located on the second transfer member to the battery swap mechanism.

7. The battery charging and swapping station according to claim 5, wherein the conveying mechanism further comprises a horizontal rail mounted in the battery swap channel, the horizontal rail having one end extending to the battery transfer mechanism and the other end extending to the battery swap mechanism, and the conveying vehicle is mounted on the horizontal rail and is movable along the horizontal rail.

8. The battery charging and swapping station according to claim 2, wherein the temporary storage mechanism comprises a second fixation member, and a third driving assembly and a third transfer member that are mounted to the second fixation member, the third transfer member being capable of carrying a battery, and the third driving assembly being connected to the third transfer member and being capable of driving the third transfer member to move, so as to transfer a battery located on the third transfer member to the battery swap mechanism.

9. The battery charging and swapping station according to any one of claims 2 to 8, wherein the battery compartment further comprises a container in which the battery rack and the battery transfer mechanism are mounted, and an opening is provided in a bottom plate of the container and is in communication with the battery swap channel.

10. The battery charging and swapping station according to claim **1,** wherein the battery rack is located between the battery transfer mechanism and the battery swap platform, and the battery swap channel extends to below the battery rack; or
the battery transfer mechanism is located between the battery rack and the battery swap platform, and a lower portion of the battery transfer mechanism is located within the battery swap channel; or
two of the battery racks are provided, the battery transfer mechanism is located between the two battery racks, and the battery swap channel extends to below the battery rack which is close to the battery swap platform.
